(19) Europäisches Patentamt
European Patent Office
Office européen des brevets

(11) **EP 1 507 404 B1**

(12) **EUROPEAN PATENT SPECIFICATION**

(45) Date of publication and mention
of the grant of the patent:
**02.05.2018   Bulletin 2018/18**

(51) Int Cl.:
***H04N 1/52*** *(2006.01)*

(21) Application number: **03018423.8**

(22) Date of filing: **14.08.2003**

(54) **Tone-dependent halftoning with optimized lookup tables**

Tonabhängige Halbtonrasterung mit optimierten Nachschlagtabellen

Obtention de demi-teintes dépendante de la tonalité utilisant des tableaux de consultation optimisés

(84) Designated Contracting States:
**AT BE BG CH CY CZ DE DK EE ES FI FR GB GR HU IE IT LI LU MC NL PT RO SE SI SK TR**

(43) Date of publication of application:
**16.02.2005   Bulletin 2005/07**

(73) Proprietor: **SICPA HOLDING SA**
**1008 Prilly (CH)**

(72) Inventors:
  • **Cattarinussi, Serge**
   **1423 Villars-Burquin (CH)**
  • **Fine, Kevin**
   **1400 Yverdon-Les-Bains (CH)**
  • **Rapin, Patrick**
   **1543 Grandcour (CH)**
  • **Baroud, Taha**
   **1004 Lausanne (CH)**

(74) Representative: **Carvajal y Urquijo, Isabel et al**
**Clarke, Modet & Co.**
**Suero de Quiñones, 34-36**
**28002 Madrid (ES)**

(56) References cited:
**EP-A- 0 654 940          US-A- 6 002 804**
**US-A1- 2003 038 953     US-B1- 6 501 564**

**Description**

The present invention relates to a method for color image processing and, more particularly, to an error diffusion technique which optimizes the choice of colored dots to produce more pleasing distributions of dots when printing said color image.

Images, such as charts, drawings, and pictures, may be represented as a two-dimensional matrix of picture elements (pixels). The spatial resolution and intensity level for each pixel are chosen to correspond to the particular output device used. For example, typical computer monitors display images at 75 dots per inch (DPI) and have 256 levels of intensity for each color. Such monitors use the additive primary colors, red, green, and blue (RGB), which can be combined to produce millions of colors and also black.

Typical hardcopy output devices, such as inkjet printers, are limited in the number of intensity levels they can reproduce, meaning that for each pixel or possible dot location on the printed medium they can only print m intensity levels, where m is smaller than 256.

For the sake of clarity of description, it is assumed that m is 2, so that the printer can only print two levels: on or off. Therefore, some means must be provided to convert the monitor-based version of the image (256 intensity levels per color), or another version of the color image, to the printer version (2 levels per color). These conversion methods are commonly referred to as halftoning.

Halftoning methods are described in the book Digital Halftoning, by Robert Ulichney, The MIT Press, 1987.

One major approach to halftoning is error diffusion. The decision about whether or not to print a dot is based not only on the "ideal" intensity (i.e., one of the 256 possible intensities) for that pixel, but on what has happened before for previously processed pixels. The present invention is directed to an improved error diffusion technique.

It is assumed in the following explanation that the pixel intensity may range between 0 and 255. In error diffusion, at each point where a dot may be printed, the original image pixel intensity between 0-255, plus accumulated error, is compared to a previously chosen threshold value. If the image pixel intensity is greater than the threshold value, a dot (corresponding to an intensity of 255) is assigned to that pixel. If not, no dot (corresponding to an intensity of 0) is assigned. In either case, the intensity difference between the actual dot value assigned (0 or 255) and the ideal image pixel intensity plus accumulated error for that point is derived, and this difference becomes an error term that is "diffused" to other subsequently processed pixels. In other words, the diffused error term is added to the image pixel intensity plus the accumulated error of the subsequently processed pixels, and this total resultant image pixel intensity is then compared against the error diffusion threshold to determine whether a dot should be printed or not. A typical threshold value is 50% of the maximum theoretical image pixel intensity. For example, if there are 256 intensity levels (0 to 255) per pixel, a level of 128 may be chosen as the threshold value. In other error diffusion techniques, the threshold may be varied to avoid noticeable dot patterns being printed.

A well known error diffusion technique is described by R. Floyd and L. Steinberg in the paper Adaptive Algorithm for Spatial Grey Scale, SID Int'l. Sym. Digest of Tech. Papers, pp. 36-37 (1975), incorporated herein by reference. The Floyd and Steinberg error diffusion technique diffuses the error into a set of four surrounding pixels.

When printing a color image, dots for three primary colors, cyan, magenta, and yellow, must be printed in various combinations to achieve the desired color tones to reproduce the original color image. Originally, error diffusion methods were applied to each color independently. Due to random chance, these overlapping color dot patterns inevitably result in two or more dots of different previously processed pixels. The present invention is directed to an improved error diffusion technique.

It is assumed in the following explanation that the pixel intensity may range between 0 and 255. In error diffusion, at each point where a dot may be printed, the original image pixel intensity between 0-255, plus accumulated error, is compared to a previously chosen threshold value. If the image pixel intensity is greater than the threshold value, a dot (corresponding to an intensity of 255) is assigned to that pixel. If not, no dot (corresponding to an intensity of 0) is assigned. In either case, the intensity difference between the actual dot value assigned (0 or 255) and the ideal image pixel intensity plus accumulated error for that point is derived, and this difference becomes an error term that is "diffused" to other subsequently processed pixels. In other words, the diffused error term is added to the image pixel intensity plus the accumulated error of the subsequently processed pixels, and this total resultant image pixel intensity is then compared against the error diffusion threshold to determine whether a dot should be printed or not. A typical threshold value is 50% of the maximum theoretical image pixel intensity. For example, if there are 256 intensity levels (0 to 255) per pixel, a level of 128 may be chosen as the threshold value. In other error diffusion techniques, the threshold may be varied to avoid noticeable dot patterns being printed.

A well known error diffusion technique is described by R. Floyd and L. Steinberg in the paper Adaptive Algorithm for Spatial Grey Scale, SID Int'l. Sym. Digest of Tech. Papers, pp. 36-37 (1975), incorporated herein by reference. The Floyd and Steinberg error diffusion technique diffuses the error into a set of four surrounding pixels.

A document US-6,002,804 describes a method wherein two halftoning algorithms are used alternatively, the first algorithm being based on error diffusion technique, the second being matrix based. The method determines the optimal algorithm to apply in function of input pixel tone and a corresponding algorithm is applied to cyan plane independently and another algorithm to magenta plane.

When printing a color image, dots for three primary colors, cyan, magenta, and yellow, must be printed in various combinations to achieve the desired color tones to reproduce the original color image. Originally, error diffusion methods were applied to each color independently. Due to random chance, these overlapping color dot patterns inevitably result in two or more dots of different colors overlapping or being adjacent to one another which is perceived by the human eye as a clumping of dots. In order to avoid these clumps, error diffusion routines were invented which compared some function of the color planes, such as cyan added to magenta, to the error diffusion threshold. This has the effect of correlating the color planes.

A document US 2003/0038953 A1 teaches a method of halftoning a color image composed of an array of pixels wherein Yellow plane and blacK plane are processed separately, Cyan and Magenta planes being correlated and processed by an algorithm, in which a set of allowed colors is chosen, a color value is quantized in a distorted device independent color space among the allowed color set followed by quantization error diffusion and outputting of halftone pixels.

US 2003/0038953 A1 discloses the use of a lookup table addressed by the input pixel components C and M as coordinate values for reading the table, more precisely addressed by the component sum C+M.

In fact, US 2003/0038953 A1 describes the use of two lookup tables to prevent saturation phenomenon in the table input range, the first table LUT being used to process usually the unsaturated case, i.e. C+M<255 (Byte overflow limit), the other and sole other table LUT' being intended to treat the case of saturation, i.e. 255<C+M in order to avoid inconsistent coding overflow errors.

While these techniques improved light tone regions, they did little to help other regions, in particular darker tone regions.

In order to noticeably improve the quality of the output, the present invention performs error diffusion halftoning by using pixel color as an index into a linked set of multi-dimensional look-up tables thereafter referenced as LUT(s). These LUTs store the drop combinations to be printed for each color.

The method of processing an image object of the present invention replaces the "quantizer" part of error diffusion. The quantizer is the mechanism in error diffusion that chooses which colors to print once the pixel color has been calculated, for example in the correlated algorithm, it is the comparison of a function of the color to a threshold. In the present invention, the result is simply stored in a LUT.

Another object of the invention is related to a method of generating and selecting an optimum LUT for each input color. This method consists of first producing a collection of possible LUTs, then using these LUTs to halftone patches of constant color. The halftoned patches are then analyzed and an optimum LUT is selected for that color. This process is repeated for all different colored patches to create an optimum LUT for any input color. This way the halftoning can be optimized for all input color regions, reducing unwanted artifacts and producing pleasing distributions of colored dots.

Thus, the quantizing step uses a multiple set of LUTs. First, the original pixel color (without added error) is used to find a Color Index in an "Index LUT." This Color Index is used to choose the optimum among a multiple set of "Color LUTs." Next, the pixel color including error is used as an index into the chosen Color LUT to find the color to be printed. This process takes little computer power, since it involves simply locating values in tables, which have been created beforehand by the time-consuming optimization stage.

The goal of the present invention is to provide a method of processing an input image composed of an array of pixel for producing an output image to be printed on a device having a limited number of intensity value using an optimized index Lookup table and a color lookup table for each color. This goal is achieved with a method comprising the steps of claim 1 an 2.

Another goal of the present invention is to provide a method for generating and selecting an optimized LUT for each input color to then to use this optimized set of color LUTs in an halftoning error diffusion process to improve the appearance of the resulting printed image. This goal is achieved with a method comprising the characteristics recited in claim 7.

Further advantages and characteristics are recited in the depending claims and in the following description.

The invention will now be better understood with reference to the following detailed description and with reference to the accompanying non limiting drawings in which:

Figure 1 is an schematic view of a typical image processing system for a printer.
Figure 2 is an schematic view of a general error diffusion halftoning algorithm.
Figure 3 is a flowchart showing the steps performed by the quantizer for the error diffusion algorithm used in the invention.
Figure 4 is the result of halftoning a light color (cmy = (10, 20, 0)) patch using an error diffusion algorithm that treats each color plane independently.

Figure 5 is the result of halftoning a light color (cmy = (10, 20, 0)) patch using an error diffusion algorithm that correlates the cyan and magenta planes.

Figure 6 is the result of halftoning a darker color (cmy = (239, 47, 0)) patch using an error diffusion algorithm that correlates the cyan and magenta planes.

Figure 7 is the result of halftoning a darker color (cmy = (239, 47, 0)) patch using an error diffusion algorithm of the invention that has been optimized for this color.

Figure 8 is an example of a two-dimensional (cyan (c) and magenta (m) planes) version of an Index LUT.

Figure 9 is an example of a two-dimensional (cyan (c) and magenta (m) planes) version of a Color LUT.

Figure 10 are two-dimensional (cyan (c) and magenta (m) planes) LUTs 1 through 77 used in the optimization method.

Figure 11 are two-dimensional (cyan (c) and magenta (m) planes) LUTs 78 through 143 used in the optimization method.

Figure 12 are the noticeable dot colors for the given color pairs (c,m) in the cyan magenta plane.

The method of the present invention involves two components: a quantizer based upon the use of lookup tables LUTs and an optimization procedure for producing a set of LUTs to use in this quantizer. First the quantizer will be described in detail.

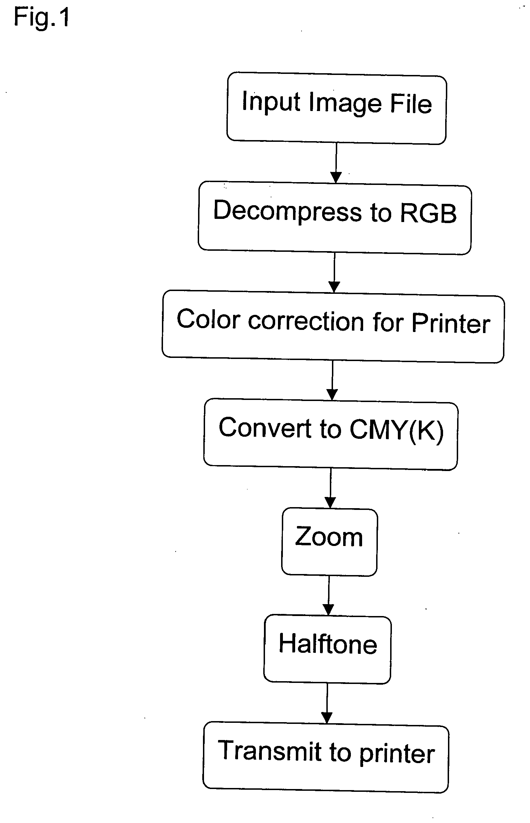

Figure 1 shows an overview of a typical image processing system for a printer. This system might be implemented on the host computer, or on the printer itself, or as a combination of the two. The first step is to decompress the image into a matrix of pixels in RGB color space. Next, this image is color corrected using a pre-calculated color calibration table. This table is designed specifically for the printer to be used and corrects for the color distortions introduced by printer inks. Then the image is converted into CMY (cyan magenta yellow) or CMYK (cyan magenta yellow black), depending on whether a black ink (K) is used. There may even be more color planes, such as light cyan and light magenta at this point, depending upon the target printer. Next, the zoom module adapts the size of the image to the desired output, typically involving an enlargement of the image.

At this point the transformed image enters the halftoning module. In the following, this transformed image will be considered the "input" image. In order to make the discussion concrete, CMY color coordinates will be used for this image, that is, the image is composed of an array of pixels with the three color planes cyan, magenta and yellow, which we will denote by c, m and y. Furthermore, it is assumed that the intensity of each of these pixels in each color plane is stored as a number between 0 and 255, with 0 representing black and 255 the maximum intensity of color possible. It will be understood that this is for illustrative purposes only, since it will be clear to someone with ordinary skill in the art how to adapt the invention to different numbers of color planes, or numbers of intensity levels, or different color coordinates.

In the following, the halftoning module will be discussed. This module transforms the input image into the output image which has a reduced color set of intensity values. The next stage transforms this output image into a suitable form that can be understood by the printer and transmits it to the printer.

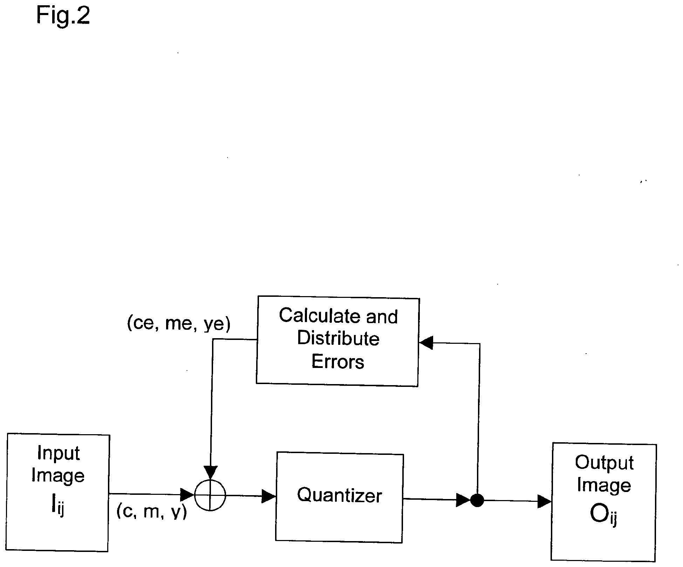

The particular form of halftoning used is error diffusion. Figure 2 depicts a simplified schematic representation of an error diffusion halftoning process. In error diffusion, pixels are normally scanned one at a time along each image line, and then each image line processed in sequence. Thus, one pixel consisting of the three color components (c, m, y), of the input image is to be treated at a time.

First, values of accumulated error (ce, me, ye) for this pixel are added to the input pixel. Then the pixel color plus error is sent to the quantizer, which chooses one of the limited set of output colors is to be placed at location (i,j), denoted by $O_{ij}$, which contains the three values (Oc, Om, Oy), which are 1 if a dot of that color is to be placed at that pixel location. The "error" made by placing this color is then calculated and stored in memory in order to accumulate errors for subsequent pixels. It is the sum of all these errors that results in the accumulated error ce, me and ye, for each pixel.

In "classic" error diffusion, each color plane of each pixel is compared to a threshold, usually 128, in order to decide which dot to place. If c+ce is greater than the threshold, a cyan dot is placed, if not, the cyan dot is not placed. The same process is repeated with m+me and y+ye. As mentioned above, more sophisticated versions of error diffusion compare functions of these quantities, such as c+ce+m+me, to a threshold in order to correlate the color planes.

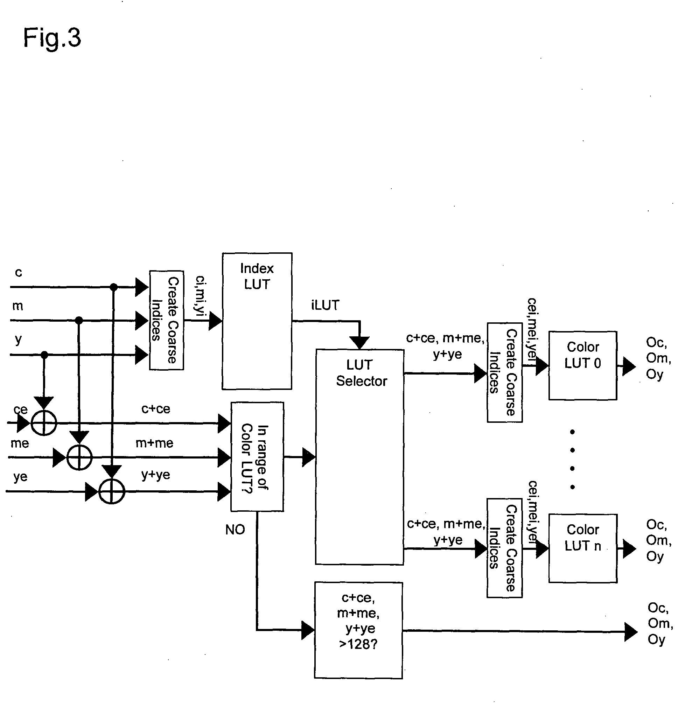

Figure 3 shows the quantizing system of the present invention. Note that all six quantities c, m, y, ce, me and ye are available to the quantizer. First, c, m and y are used to produce a Color Index, denoted by iLUT in Figure 3, using the Index LUT. The Color Index will be used in the next step to select among a plurality of Color LUTs.

The Index LUT may be of different sizes, but here an Index LUT of size 8x8x2 is used in the preferred embodiment. This means that there are 8 different columns in the LUT for different c values, 8 different rows for different m values, and two planes of values for the y values. In order to reference the correct cell in this array of values, a set of 3 values must be produced which will be termed Coarse Indices, denoted by (ci, mi, yi). In practice, this means that the value of c, normally represented by an 8 bit number, is reduced to three bits by keeping only the three most significant bits to produce a number between 0 and 7. In other words, the values of c between 0 and 15 produce a Coarse Index of 0, while values of c between 16 and 31 produce a Coarse Index of 1, and so on. The same scheme is applied to m. For y, only the single most significant bit need be considered, so that values of y between 0 and 127 produce a Coarse Index of 0, and those between 128 and 255 produce a Coarse Index of 1. Yellow is treated differently because the eye is less sensitive to yellow and less precision is acceptable for yellow.

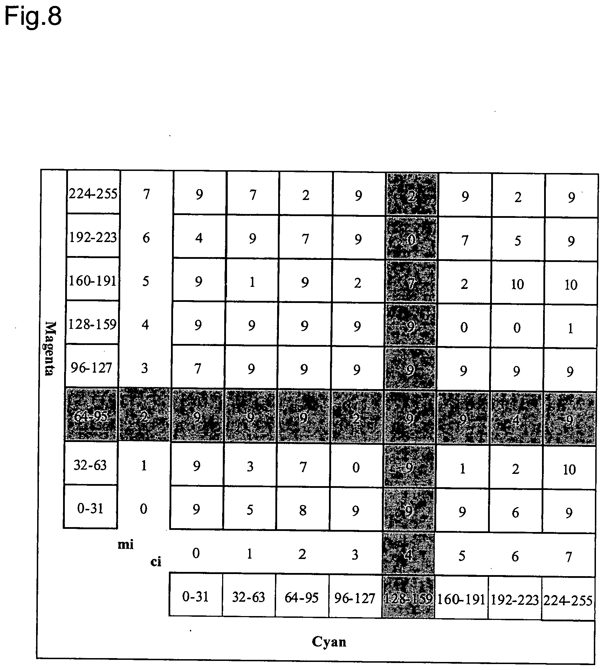

In figure 8, y is assumed to be 0, and the Index LUT is depicted as a two-dimensional array. In this case there are 11 different Color LUTs referred to by Color Index values numbered from 0 to 10. As previously described, the three most significant bits of c and m are used to create Coarse Indices (ci, mi) into this table. For example, an input of c=131 and m=65 will result in a ci of 4 for c and a mi of 2 for m. These values are highlighted in figure 8 by the grayed row and column. The result is a single number, 9, which is the Color Index of the Color LUT to be used in the following step.

Returning to figure 3, once the Color Index has been selected, the errors ce, me and ye are added to the input color c, m and y. Note that the resulting value is not necessarily an integer, so the value is first converted to the nearest integer. However, this integer may lie outside of the range 0 to 255. Thus the Color LUTs must cover a larger range, such as -128 to +383, or values outside the range 0 to 255 must be treated differently. Here the latter option is used, with Color LUTs using exactly the same size and Coarse Indexing scheme as the Index LUT, which is 8 by 8 by 2 indexed by values between 0 and 255.

If all the values c+ce, m+me and y+ye do not lie in the range 0 to 255, the pixel is processed differently. In figure 3 the pixel is treated by the classic Floyd-Steinberg quantizer, where each component of the color is compared independently to a threshold of 128, and if the value is greater than this threshold the colored dot is placed and otherwise it is not placed. It has been found that the out of range scheme used does not noticeably affect the quality.

For pixels which have all values within the range 0 to 255, the pixel values plus errors are passed to the Color LUT chosen by the LUT selector. The next step is to produce Coarse Indices using the same procedure as previously described for the Index LUT. However, since the color components now include the accumulated error, the Coarse Indices are generally different, and are denoted by (cei, mei, yei). These three indices are used to address an array cell in the chosen Color LUT that contains the output values Oc, Om and Oy. Here, the values can be 0 or 1, dependent whether that colored dot is to be placed or not.

In the present invention, the Color LUT is changed not in response to different output mediums, but in different regions of color. Multiple LUTs are used to halftone the same image, each one selected to give an optimum distribution of colored dots.

Also note that if the Coarse Indices for the Index LUT (ci, mi, yi) were equal to the Coarse Indices for the Color LUT (cei, mei, yei) that such a scheme could be replaced by one LUT only. Instead, in the present invention, the idea is that the same Color LUT, which is indexed including the error, is optimized and does not change in regions of constant color. It is not obvious that such a scheme will produce a good distribution of dots in regions where the color changes rapidly, but in practice it has been found to work well.

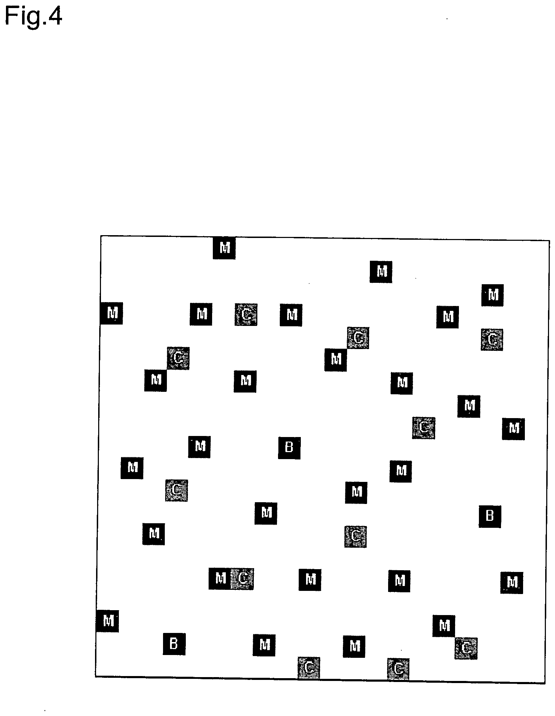

By way of example, figure 4 shows the result of halftoning a light color (cmy = (10, 20, 0)) using an error diffusion algorithm that treats each color plane independently and where noticeable 'clumps' of dots are present.

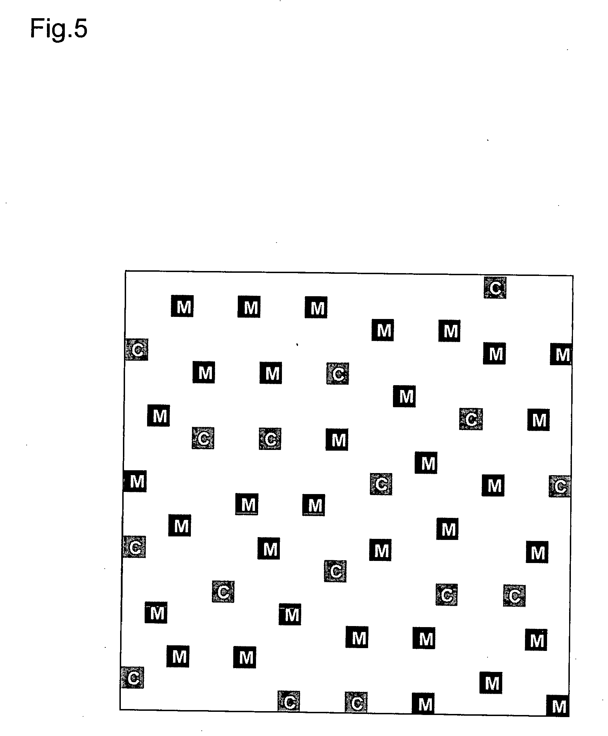

Figure 5 shows the result of applying known prior art "correlated" halftoning algorithm to the same color patch as in figure 4. Note the more regular distribution and absence of blue dots.

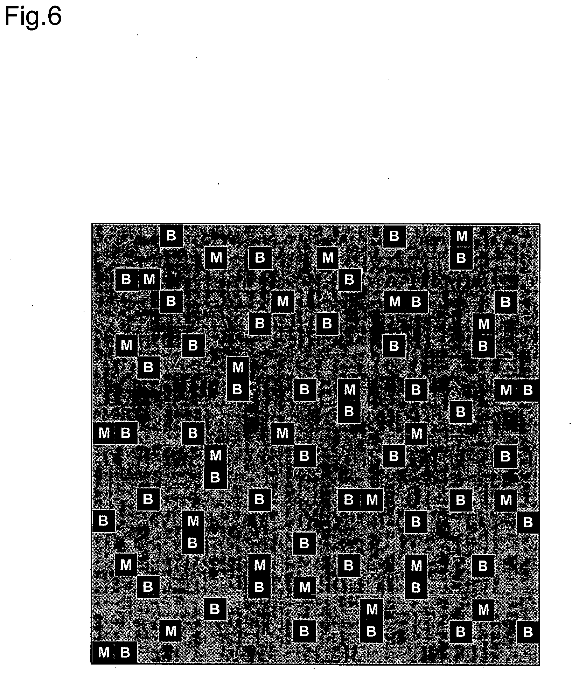

While light tone regions are improved, other regions, in particular darker region are not. Figure 6 shows the same correlated algorithm applied to a region of color which is much darker (cmy = (239, 47, 0)) than the color in figures 4 and 5. Here all pixels are illuminated, and the grey background indicates pixels which are colored cyan. In this case, it is the magenta and the blue pixels that are clumped.

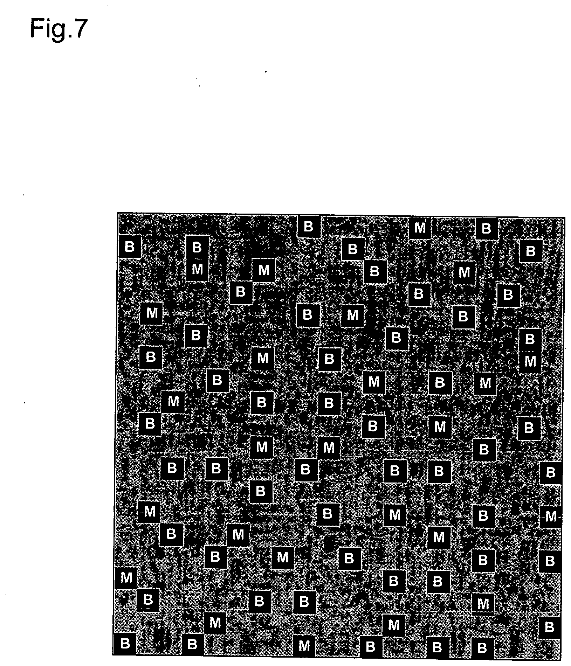

One can notice that known error diffusion algorithms that correlate the cyan and magenta planes improve light tone regions, but offers poor results for darker regions. Figure 7 shows the result of halftoning the same darker color (cmy = (239, 47, 0)) as in figure 6 using an error diffusion algorithm according to the present invention. One can easily notice that for this color the result is more regular than that from the correlated halftoner. Thus, the optimum LUT quantizer technique significantly improves the quality of error diffusion halftoning, and can be used to improve any existing error diffusion technique.

Now that the quantizer has been described, the optimization procedure can be discussed. The basic principle is to halftone patches of constant color, and then to select the Color LUT that produces the "best" result. In what follows, the color yellow will be assumed to be zero and ignored, so that the Color LUTs will have two dimensions, c and m. The Color LUTs will be assumed to be 8 by 8, with inputs ranging from 0 to 255, as in the discussion above. Each array cell of the Color LUTs can contain one of 4 values: the output is white (no dot), a cyan dot, a magenta dot, or a blue dot (cyan and magenta.)

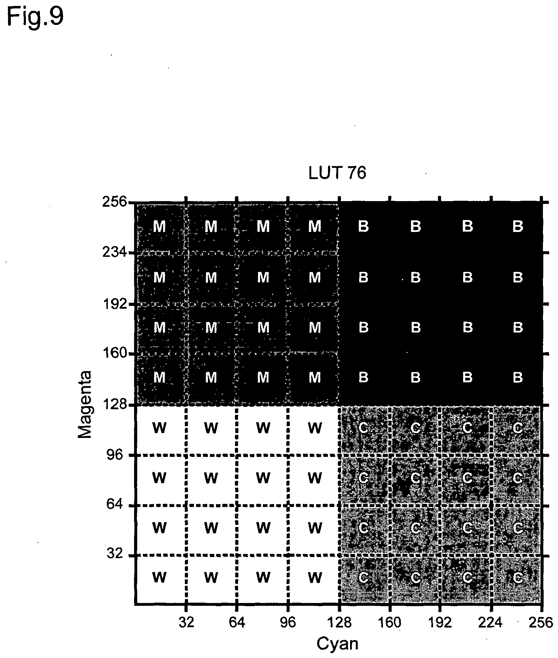

An example of such an 8 by 8 LUT is shown in figure 9. Each element of this LUT is the color that is to be placed for the given input, with W indicating White (no dot), M indicating Magenta, C indicating Cyan, and B indicating Blue, or both a magenta and a cyan dot. The particular LUT shown gives the same results as independently halftoning the cyan and magenta planes.

There are many possible versions of such an 8 by 8 Color LUT. Since there are 64 different boxes, each which can have one of 4 different values, the total number of possible LUTs is $4^{64} \approx 3.4 \times 10^{38}$, a number too large for practical computation. Therefore, a way to generate a limited size set of LUTs for practical optimization must be found. The following 3 principles were used to produce such a set:

The array cells at each corner are fixed at the color of the corner. Therefore the array cell $0 \leq c \leq 31$ and $0 \leq m \leq 31$ is always white. The other corners (moving in a clockwise direction in figure 9) are always magenta, blue and cyan.

All other array cells must have at least one side connected to a cell of the same color. Cells touching along a diagonal do not count.

The LUT is approximately symmetric along the lines from (c, m) = (0, 0) to (c, m) = (255, 255) and (c, m) = (0, 255) to (c, m) = (255, 0).

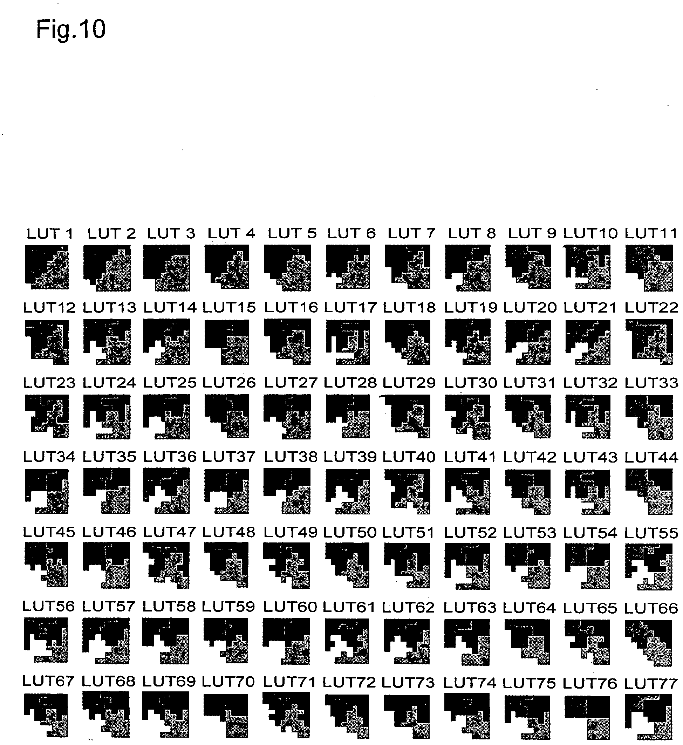

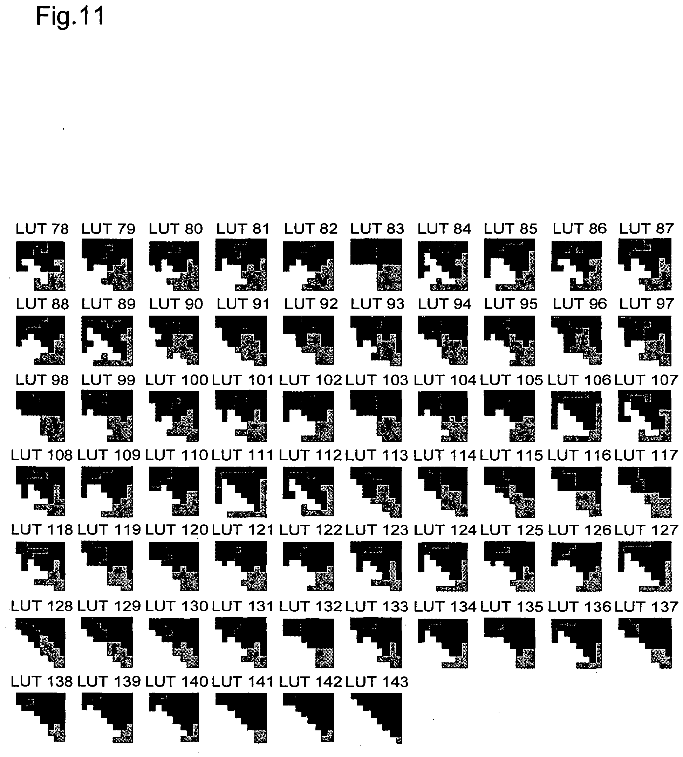

Here, "approximately" symmetric means that the LUTs are as symmetric as possible, since the two diagonal lines of blocks cannot be symmetric for all LUTs. The set of LUTs generated is shown in figure 10 and figure 11, which consists of 143 different LUTs. This set is not meant to represent the complete set which can be generated following the above 3 principles, which is much larger, since array cells along the diagonals of the array can be permuted to generate many more combinations. However, these permutations do not represent LUTs that would substantially change the halftoning, and this set already represents a wide ranging set useful in optimizing. Note that the LUT shown in Figure 9 appears as LUT 76 in this list.

The next step is to measure the quality of halftoning from each of these LUTs. To do this, patches of color were generated with colors given by all possible combinations of the values of c and m equal to one of the set 15, 47, 79, 111, 143, 175, 207 and 239. There are 64 different color patches generated, and they represent the colors located approximately at the center of each array cell in Figure 9. Patches of size 200 pixels by 200 pixels were a practical choice, since a total of 64 x 143 = 9152 such patches can be halftoned by a computer program in a few minutes.

Once the patches are halftoned, the "best" LUT for each color must be chosen. The best halftoned pattern is somewhat subjective, but some objective principles can be identified. The approach used was to choose from the 143 Color LUTs a set of 6 using a computer program which minimizes certain numerical quantities calculated from each halftoned pattern. Then the final selection of the best LUT from this pre-filtered set of 6 is performed by eye.

This whole procedure is repeated from the beginning for each different color patch, so that Color LUTs that are eliminated while optimizing one color might not be eliminated for other colors.

The first numerical quantity used is the distance from the ideal numbers of colored dots. Given an input color of c and m, there is an ideal number of cyan dots, nCyan, and magenta dots, nMagenta. For example, for (c,m)=(127,0) half of the 200x200=40,000 pixels should be cyan, so nCyan=20,000 and nMagenta=0. In practice, statistics will make the values slightly different, but they should be close.

Even more interesting is to divide the pixels into 4 categories: white, cyan, magenta and blue dots, with total numbers nW, nC, nM and nB. Note that nC is not generally equal to nCyan and that nM is not generally equal to nMagenta. This is because blue dots will be counted as nCyan and nMagenta but not as nC and nM.

In addition, these 4 numbers are not fully determined by the input color (c, m). This can easily be seen by considering a light blue color, with a few magenta dots and a few cyan dots. All cyan dots could either be placed on top of all magenta dots, given a few blue dots and nC = 0 and nM = 0, or they could always be separated, giving nB = 0 and nC and nM bigger than zero. To determine the set of numbers nW, nC, nM and nB, an additional assumption must be made.

The additional assumption used is that the standard deviation of the brightness of pixels should be minimized. The standard deviation is a statistical measure of the variation of a quantity, and this criterion is meant to maximize the smoothness of the image. The brightness, Br, is not strictly defined, since RGB and consequently CMY coordinates are not photometrically precise. However, a definition which is approximately proportional to perceived brightness is

$$Br = 255 - 0.2\,c - 0.7\,m - 0.1\,y,$$

where Br is in the range 0 to 255. Since the value of yellow is y = 0 in the present discussion, Br ranges from 25.5 to 255. Every pixel has a brightness value, and the standard deviation can be calculated for the entire image. It can be shown that the minimum variation in brightness is obtained if the number of blue pixels is always minimized. Here, the minimum variation in Br is used to choose a best set denoted by $nW_B$, $nC_B$, $nM_B$ and $nB_B$. Then the 20 LUTs which minimize the distance

$$d \equiv \sqrt{(nW - nW_B)^2 + (nC - nC_B)^2 + (nM - nM_B)^2 + (nB - nB_B)^2}$$

are kept.

The color distance filter removes Color LUTs that produce numbers of colors too far from the ideal, such as Color LUTs that produce blue dots for light blue colors. It does not give information about the spatial distribution of those dots. The expression for d depends only upon the total number of dots placed of each color. For example, all the blue dots could be arranged in one corner, and this would not change d if nW, nC, nM and nB were the same. Clearly, a second test is needed for the spatial uniformity of the dot distribution.

For spatial uniformity, a second quantity is used which is called the Clustering function, denoted by the symbol CL. To illustrate the idea, refer to the pixel distribution shown in figure 5. Here, the pixels that are noticed are the magenta (M) and the cyan (C) pixels. The white pixels are perceived as background. The Clustering function is designed to be large when pixels are arranged in groups or clusters and small when they are evenly distributed. To quantify the Clustering function, the binary image bij is introduced. Each pixel in bij is 1 for all pixels which are "noticed," or stand out to the eye, and zero otherwise. In the case of figure 5, bij is 1 if the pixel at location (i, j) in the output image is cyan or magenta, and zero otherwise. The indices i and j label each pixel, and vary from 1 to 200 for the 200 by 200 patches. The Clustering function is defined by

$$C_L(b_{ij}) \equiv \frac{\sum_{i=5}^{196} \sum_{j=5}^{196} b_{ij} \times \left( \sum_{k=-4}^{4} \sum_{l=-4}^{4} G_{kl} \times b_{i+k,j+l} \right)}{\sum_{i=5}^{196} b_{ij}},$$

where G is the symmetric 9 by 9 matrix

$$G \equiv \begin{vmatrix} 0.0313 & 0.0400 & 0.0500 & 0.0588 & 0.0625 & 0.0588 & 0.0500 & 0.0400 & 0.0313 \\ 0.0400 & 0.0556 & 0.0769 & 0.1000 & 0.1111 & 0.1000 & 0.0769 & 0.0556 & 0.0400 \\ 0.0500 & 0.0769 & 0.1250 & 0.2000 & 0.2500 & 0.2000 & 0.1250 & 0.0769 & 0.0500 \\ 0.0588 & 0.1000 & 0.2000 & 0.5000 & 1.0000 & 0.5000 & 0.2000 & 0.1000 & 0.0588 \\ 0.0625 & 0.1111 & 0.2500 & 1.0000 & 0.0000 & 1.0000 & 0.2500 & 0.1111 & 0.0625 \\ 0.0588 & 0.1000 & 0.2000 & 0.5000 & 1.0000 & 0.5000 & 0.2000 & 0.1000 & 0.0588 \\ 0.0500 & 0.0769 & 0.1250 & 0.2000 & 0.2500 & 0.2000 & 0.1250 & 0.0769 & 0.0500 \\ 0.0400 & 0.0556 & 0.0769 & 0.1000 & 0.1111 & 0.1000 & 0.0769 & 0.0556 & 0.0400 \\ 0.0313 & 0.0400 & 0.0500 & 0.0588 & 0.0625 & 0.0588 & 0.0500 & 0.0400 & 0.0313 \end{vmatrix}.$$

If the indices k and l of this matrix run from -4 in the upper left corner to 4 at the lower right corner, the values are just one divided by $k^2 + l^2$, which can be interpreted as the square of the distance in pixel units of each pixel from the center pixel, with indices k = 0 and l = 0. The value for the center pixel diverges and has been replaced by zero. The ranges of the sums in the equation for the Clustering function vary from 5 to 196 in order to eliminate the borders of the image, where the matrix G extends beyond the image. The denominator normalizes CL by the total number of pixels which are noticed, eliminating the borders which are not counted.

There are many other functions which could be used to measure the spatial uniformity of an image, and the choice of a 9 by 9 size for the matrix G is somewhat arbitrary. Nevertheless, this definition works well. However, there remains the question of the definition of which pixels are "noticeable." For figure 5, it is the magenta and cyan pixels. For figure 6 and figure 7, however, it is the magenta and the blue pixels. Clearly, the pixels that are noticed are a function of the color of the patch.

The notion of noticeable pixels can be made rigorous using the previously calculated "best" distribution $nW_B$, $nC_B$, $nM_B$ and $nB_B$ for each color (c, m). The following algorithm is applied to classify either 1 or 2 colors of dots as noticeable as a function of color (c, m):
The quantities $nW_B$, $nC_B$, $nM_B$ and $nB_B$ are divided by the total number of pixels (40,000 for a 200 by 200 patch) to produce the normalize values nWN, nCN, nMN and nBN. All these quantities lie in the range 0 to 1.

Any of nWN, nCN, nMN and nBN is eliminated from consideration as noticeable if they are less than 4/255. These pixels are considered too rare.

Any of nWN, nCN, nMN and nBN which are greater than 55/255 is also eliminated. These pixels will be considered "background," like the cyan pixels in figure 6.

If none of nWN, nCN, nMN and nBN remains, the smallest of these values greater than 55/255 is considered the noticeable color.

If one of nWN, nCN, nMN and nBN remains, it is considered the noticeable color.

If more than one of nWN, nCN, nMN and nBN remain, the two smallest values are considered the noticeable colors.

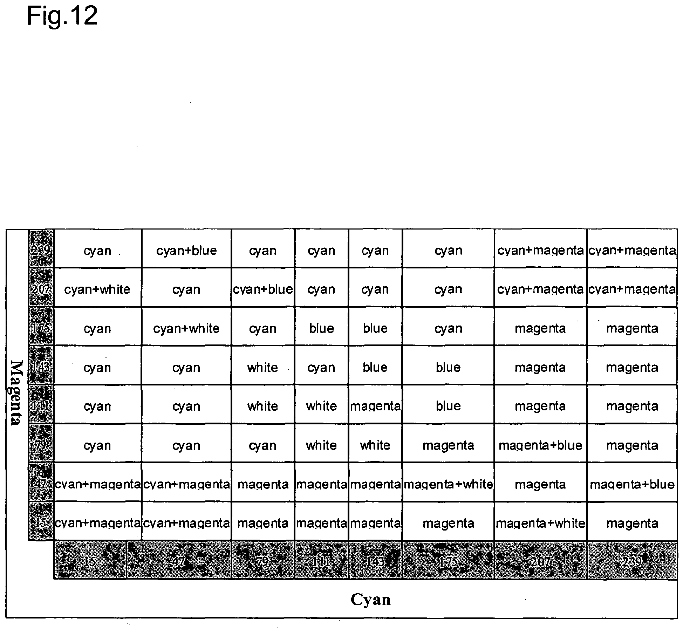

The results of applying this algorithm seem to agree well with the intuitive feeling of which colors are noticeable by eye. These results are shown in figure 12 for the 64 colors halftoned for the optimization.

Thus, the procedure of finding the best Color LUT for a color (c, m, y) can be summarized as follows:

A 200 by 200 pixel color patch is generated with every pixel given the color (c, m, 0). That is, yellow is set to zero for the patch.

The color patch is halftoned with the LUT quantizer using each of the 143 different two-dimensional Color LUTs producing 143 different halftoned patches.

The color distance d is calculated for each of the 143 color patches and the patches that yield the 20 smallest values of d are kept.

A pre-calculated table containing the noticeable dots is consulted to decide which dots are noticeable for the color (c, m, 0).

The noticeable dots are used to calculate the image bij for every one of the 20 remaining patches. This is used in turn to calculate the Clustering function CL for every remaining patch. The 6 patches with the smallest value of CL are kept.

These 6 remaining patches are displayed on the computer monitor, and the best is chosen by eye. To that extent, in order to select the 'best' LUT by eye, all 6 remaining patches are displayed next to one another on a computer monitor capable of producing 256 different levels for each red, green and blue. Furthermore, the images are displayed so that one pixel on the monitor corresponds to one pixel in the images. This step is important in order to eliminate aliasing effects between the pixels in the image and the monitor. Once the images are displayed in this fashion, the operator selects the most pleasing image by entering a number between one and 6 using the keyboard. The criterion of 'most pleasing' is somewhat subjective, and can vary between individuals, but can be at least partially defined to be the image that:

- has little visible structure, such as horizontal or vertical lines of pixels with the same color
- appears smooth, without clusters of pixels such as in figure 6
- merges into a uniform color at the smallest distance possible.

The last criterion can be applied by slowly increasing the viewing distance to the screen, and noticing which image seems to merge into a uniform color filed first.

Each color LUT is then used to create a three-dimensional color LUT (including y) by adding Oy = 0 (y dot not placed) to every cell, then duplicating the LUT with Oy = 1. The first LUT is used to construct the three-dimensional LUT by using the first LUT for the color plane with y in the range 0 to 127, and the second LUT for the plane for y from 128 to 255. This procedure is equivalent to halftoning the y plane independently.

In order to use this technique to produce an optimum LUT for all colors, the procedure is repeated for a grid of colors covering the cyan and magenta plane. A good choice for such a grid are the 64 colors that are formed by all permutations taken in groups of two of the quantities 15, 47, 79, 111, 143, 175, 207 and 239. Once each color in the grid has been optimized, all the n Color LUTs selected out of the original group of 143 are given a different index between 0 and n-1 and an Index LUT is created by collecting these Color Indices into a two-dimensional array. The Index LUT is made three-dimensional by repeating this array two times for both planes of the y component. This scheme means that the yellow color plane does not affect which Color LUT is used. However, the Color LUT chosen could be easily made to change with y if it were found important to optimize the halftoning of the y plane.

Finally, this Index LUT and the set of all Color LUTs are collected together to generate a data file to be used as input into the error diffusion software.

While there has been illustrated and described what is at present considered to be a preferred embodiment of the of the present invention, it will be appreciated that numerous changes and modifications are likely to occur to those skilled in the art, and it is intended in the appended claims to cover all those changes and modifications which fall within the scope of the present invention.

**Claims**

1. A method of processing an input image composed of an array of pixels, each pixel having n intensity values in at least the three color planes cyan (c), magenta (m) and yellow (y) for producing an output image to be printed on a device having a limited number m of intensity values, where m < n, comprising the steps of :

generating a set of color lookup tables, said color LUTs containing for each input color (c,m,y) the values of the corresponding ink drop combination to be printed;

halftoning patches of constant color for every input color component (c,m,y) with each of these color LUTs;

analyzing the resulting patches and selecting an optimum color LUT for each input color (c,m,y);

creating an index lookup table referencing for each input color (c,m,y) the color LUT to be used for this input color;

using the original input pixel color (c,m,y) for each pixel of the image to create a color index (ci,mi,yi);

using this color index (ci,mi,yi) to determine in the index lookup table which color LUT to use;

determining the accumulated diffusion error (ce,me,ye) for this pixel;

adding the accumulated error (ce,me,ye) to the input pixel color (c,m,y) and using this value as an index in the previously selected color LUT to find the drop combination to be printed for this pixel;

storing these values in an output image to be printed

2. A method according to claim 1 **characterized in that** the index lookup table used to calculate the color index (iLUT) is a three dimensional index lookup table having 8 different columns for different c values, 8 different rows for different m values and two planes of values for y values, and **in that** coarse indices, ci, mi, yi, are used to reference the correct cell in said index lookup table; ci and mi being obtained by keeping only the three most significant bits of c and m, and that yi is obtained by keeping only the most significant bit of the y input value.

3. Method according to claim 2, **characterized in that** coarse indices, cei, mei, yei, used to obtain the output values Oc,Om,Oy in the color LUT, and are obtained by keeping only the three most significant bits for the input values plus the accumulated error (c+ce) and (m+me) in the cyan and magenta planes and that yei is obtained by keeping only the most significant bit for the input value plus the accumulated error (y+ye) in the yellow plane.

4. A method according to claim 3, **characterized in that** the color LUTs have two dimensions of 8 rows by 8 columns and that each of the 64 cells have one of the following values, M,B,C,W, where W means output no dot, M output a magenta dot, C output a cyan dot and B output a cyan and magenta dot, and in which the yellow plane is ignored.

5. A method according to one of the preceding claims, **characterized in that**

   - the step of generating a limited set of color LUTs comprises generating a set of 143 lookup tables using the following rules:

      the array cells at each corner are fixed at the color of the corner;
      all other cells have at least one side connected to a cell having the same color;

   - the step of halftoning patches of constant color for every input color component (c,m,y) with each of theses color LUTs comprises:

      generating a color patch for every different input color (c,m,y) where y = 0;
      halftoning each color patch using each of the previously generated 143 color LUTs thus producing 143 different halftoned patches for each input color (c,m,0);

   - the step of analyzing the resulting patches and selecting an optimum color LUT for each input color (c,m,y) comprises:

      calculating the standard deviation of the brightness value Br of each pixel for the entire patch and keeping only the 20 color patches that minimize the color distance d;
      determining the noticeable dots for the color (c,m,0); calculating a clustering function CL which measures the spatial distribution of noticeable dots in the patches; keeping the 6 patches that minimize the clustering function CL;
      displaying the 6 remaining patches on a display and choosing the most pleasant one by eye; and
      repeating the preceding steps for a grid of colors covering the cyan and magenta planes

6. Method according to claim 5 **characterized in that** the brightness Br of each pixel is approximated by the formula $Br = 255 - 0.2*c - 0.7*m - 0.1y$.

7. Method according to claim 5 or 6 **characterized in that** the clustering function CL is designed to be large when pixels are arranged in groups or clusters and small when they are evenly distributed.

8. Method according to claim 7 **characterized in that** each selected color LUT is used to create a three dimensional color LUT by adding Oy = 0 to every cell and then duplicating the LUT with Oy = 1.

9. Method according to claim 8, **characterized in that** the grid of color covering the magenta and cyan planes is constituted of the 64 colors that are formed by all permutations taken in group of two of the quantities 15,47,79,111,143,175,207 and 239.

10. Method according to claim 9, **characterized in that** once each color in the grid has been optimized, all the n color LUT's out of the original 143 LUT's are given a different index between 0 and n-1 and **in that** an index LUT is created by collecting these color indices into a two-dimensional array and **in that** the two dimensional array is made three-dimensional by repeating this array for both planes of the y component.

**Patentansprüche**

1. Verfahren zum Verarbeiten eines Eingangsbildes, das aus einem Array aus Pixeln besteht, wobei jedes Pixel n Intensitätswerte in wenigstens den drei Farbebenen Cyan (c), Magenta (m) und Gelb (y) zum Produzieren eines Ausgangsbildes aufweist, das auf einer Vorrichtung mit einer begrenzten Anzahl m an Intensitätswerten zu drucken ist, wobei m < n gilt, welches die folgenden Schritte umfasst:

Erzeugen eines Satzes von Farbzuordnungstabellen, wobei die Farb-LUTs (Farb-Lookup-Tables - Farbzuordnungstabellen) für jede Eingangsfarbe (c, m, y) die Werte der entsprechenden zu druckenden Tintentropfenkombination enthalten;
Halbtonrastern von Stellen konstanter Farbe für jede Eingangsfarbkomponente (c, m, y) mit jeder dieser Farb-LUTs;
Analysieren der resultierenden Stellen und Auswählen einer optimalen Farb-LUT für jede Eingangsfarbe (c, m, y);
Erzeugen einer Indexzuordnungstabelle, die für jede Eingangsfarbe (c, m, y) die Farb-LUT referenziert, die für diese Eingangsfarbe zu verwenden ist;
Verwenden der ursprünglichen Eingangspixelfarbe (c, m, y) für jedes Pixel des Bildes, um einen Farbindex (ci, mi, yi) zu erzeugen;
Verwenden dieses Farbindex (ci, mi, yi), um in der Indexzuordnungstabelle zu bestimmen, welche Farb-LUT zu verwenden ist;
Bestimmen des angesammelten Diffusionsfehlers (ce, me, ye) für dieses Pixel;
Addieren des angesammelten Fehlers (ce, me, ye) zu der Eingangspixelfarbe (c, m, y) und Verwenden dieses Wertes als ein Index in der zuvor ausgewählten Farb-LUT, um die zu druckende Tropfenkombination für dieses Pixel zu finden;
Speichern dieser Werte in einem zu druckenden Ausgangsbild.

2. Verfahren nach Anspruch 1, **dadurch gekennzeichnet, dass** die Indexzuordnungstabelle, die zum Berechnen des Farbindex (iLUT) verwendet wird, eine dreidimensionale Indexzuordnungstabelle mit 8 unterschiedlichen Spalten für unterschiedliche c-Werte, 8 unterschiedlichen Zeilen für unterschiedliche m-Werte und zwei Werteebenen für y-Werte ist, und dadurch, dass grobe Indices ci, mi, yi, verwendet werden, um die korrekte Zelle in der Indexzuordnungstabelle zu referenzieren; wobei ci und mi dadurch erhalten werden, dass nur die drei höchstwertigen Bits von c und m behalten werden, und dadurch, dass yi erhalten wird, indem nur das höchstwertige Bit des y-Eingangswertes behalten wird.

3. Verfahren nach Anspruch 2, **dadurch gekennzeichnet, dass** grobe Indices, cei, mei, yei, verwendet werden, um die Ausgangswerte Oc, Om, Oy in der Farb-LUT zu erhalten, und erhalten werden, indem nur die drei höchstwertigen Bits für die Eingangswerte plus dem angesammelten Fehler (c+ce) und (m+me) in den Cyan- und Magentaebenen behalten werden, und dass yei erhalten wird, indem nur das höchstwertige Bit für den Eingangswert plus dem angesammelten Fehler (y+ye) in der gelben Ebene behalten wird.

4. Verfahren nach Anspruch 3, **dadurch gekennzeichnet, dass** die Farb-LUTs zwei Dimensionen aus 8 Zeilen mal 8 Spalten aufweisen und dass jede der 64 Zellen einen der folgenden Werte, M, B, C, W aufweist, wobei W Ausgeben keines Punktes, M Ausgeben eines Magentapunktes, C Ausgeben eines Cyanpunktes und B Ausgeben eines Cyan-und-Magenta-Punktes bedeutet und wobei die gelbe Ebene ignoriert wird.

5. Verfahren nach einem der vorhergehenden Ansprüche, **dadurch gekennzeichnet, dass**:

- der Schritt des Erzeugens eines begrenzten Satzes von Farb-LUTs Erzeugen eines Satzes von 143 Zuordnungstabellen unter Verwendung der folgenden Regeln umfasst:

die Arrayzellen an jeder Ecke sind bei der Farbe der Ecke fixiert;
alle anderen Zellen weisen wenigstens eine Seite auf, die mit einer Zelle mit der gleichen Farbe verbunden ist;

- der Schritt des Halbtonrasterns von Stellen konstanter Farbe für jede Eingangsfarbkomponente (c, m, y) mit jeder dieser Farb-LUTs Folgendes umfasst:

Erzeugen einer Farbstelle für jede unterschiedliche Eingangsfarbe (c, m, y), wobei y = 0 gilt;
Halbtonrastern jeder Farbstelle unter Verwendung der zuvor erzeugten 143 Farb-LUTs, wodurch dementsprechend 143 unterschiedliche halbtongerasterte Stellen für jede Eingangsfarbe (c, m, 0) produziert werden;

- der Schritt des Analysierens der resultierenden Stellen und des Auswählens einer optimalen Farb-LUT für jede Eingangsfarbe (c, m, y) Folgendes umfasst:

Berechnen der Standardabweichung des Helligkeitswertes Br jedes Pixels für die gesamte Stelle und Behalten von lediglich den 20 Farbstellen, die den Farbabstand d minimieren;
Bestimmen der auffallenden Punkte für die Farbe (c, m, 0) ;
Berechnen einer Clustering-Funktion CL, die die räumliche Verteilung auffallender Punkte in den Stellen misst;
Behalten der 6 Stellen, die die Clustering-Funktion CL minimieren;
Anzeigen der 6 verbleibenden Stellen auf einer Anzeige und Auswählen der angenehmsten nach Augenmaß; und Wiederholen der vorausgehenden Schritte für ein Farbgitter, das die Cyan- und Magentaebene bedeckt.

6. Verfahren nach Anspruch 5, **dadurch gekennzeichnet, dass** die Helligkeit Br jedes Pixels durch die Formel Br = 255-0,2·c-0,7·m-0,1y angenähert wird.

7. Verfahren nach Anspruch 5 oder 6, **dadurch gekennzeichnet, dass** die Clustering-Funktion CL so gestaltet ist, dass sie groß ist, wenn Pixel in Gruppen oder Clustern angeordnet sind, und klein ist, wenn sie gleichmäßig verteilt sind.

8. Verfahren nach Anspruch 7, **dadurch gekennzeichnet, dass** jede ausgewählte Farb-LUT verwendet wird, um eine dreidimensionale Farb-LUT zu erzeugen, indem Oy = 0 zu jeder Zelle addiert wird und die LUT dann mit Oy = 1 dupliziert wird.

9. Verfahren nach Anspruch 8, **dadurch gekennzeichnet, dass** das Farbgitter, das die Magenta- und Cyanebene bedeckt, aus den 64 Farben besteht, die durch alle Permutationen gebildet werden, die in Gruppen von zwei an den Quantitäten 15, 47, 79, 111, 143, 175, 207 und 239 vorgenommen werden.

10. Verfahren nach Anspruch 9, **dadurch gekennzeichnet, dass**, wenn jede Farbe in dem Gitter optimiert wurde, sämtlichen n Farb-LUTs aus den ursprünglichen 143 LUTs ein unterschiedlicher Index zwischen 0 und n-1 gegeben wird, und dadurch, dass eine Index-LUT erzeugt wird, indem diese Farbindices in ein zweidimensionales Array gesammelt werden, und dadurch, dass das zweidimensionale Array dreidimensional gemacht wird, indem dieses Array für beide Ebenen der y-Komponente wiederholt wird.

## Revendications

1. Procédé de traitement d'une image d'entrée composée d'un réseau de pixels, chaque pixel ayant n valeurs d'intensité dans au moins les trois plans de couleur cyan (c), magenta (m) et jaune (y) pour produire une image de sortie à imprimer sur un dispositif ayant un nombre limité m de valeurs d'intensité, où m < n, comprenant les étapes suivantes :

la génération d'un ensemble de tables de consultation de couleurs, lesdites tables de couleurs (LUT) contenant pour chaque couleur d'entrée (c, m, y) les valeurs de la combinaison correspondante de gouttes d'encre à imprimer ;

la mise en demi-teinte de tâches de couleur constante pour chaque composante de couleur d'entrée (c, m, y) avec chacun de ces LUT de couleur ;

l'analyse des tâches résultantes et la sélection d'une LUT de couleur optimale pour chaque couleur d'entrée (c, m, y) ;

la création d'une table de consultation d'index référençant, pour chaque couleur d'entrée (c, m, y), la LUT de couleur à utiliser pour cette couleur d'entrée, à l'aide de la couleur de pixel d'entrée d'origine (c, m, y) pour chaque pixel de l'image pour créer un indice de couleur (ci, mi, yi) ;

l'utilisation de cet indice de couleur (ci, mi, yi) pour déterminer dans la table de consultation d'index la LUT de couleur à utiliser ;

la détermination de l'erreur de diffusion accumulée (ce, me, ye) pour ce pixel ;

l'ajout de l'erreur accumulée (ce, me, ye) à la couleur de pixel d'entrée (c, m, y) et l'utilisation de cette valeur en tant qu'indice dans la LUT de couleur sélectionnée précédemment pour trouver la combinaison de gouttes à imprimer pour ce pixel ;

le stockage de ces valeurs dans une image de sortie à imprimer.

2. Procédé selon la revendication 1 **caractérisé en ce que** la table de consultation d'index utilisée pour calculer l'indice de couleur (iLUT) est une table de consultation d'index en trois dimensions ayant 8 colonnes différentes pour différentes valeurs de c, 8 rangées différentes pour différentes valeurs de m et deux plans de valeurs pour des valeurs de y, et **en ce que** des indices grossiers, ci, mi, yi, sont utilisés pour référencer la cellule correcte dans ladite table de consultation d'index ; ci et mi étant obtenus en conservant uniquement les trois bits les plus significatifs de c et m, et yi étant obtenu en maintenant uniquement le bit le plus significatif de la valeur d'entrée y.

3. Procédé selon la revendication 2, **caractérisé en ce que** des indices grossiers, cei, mei, yei, utilisés pour obtenir les valeurs de sortie Oc, Om, Oy dans la LUT de couleur, sont obtenus en conservant uniquement les trois bits les plus significatifs pour les valeurs d'entrée plus l'erreur accumulée (c + ce) et (m + me) dans les plans cyan et magenta, et yei est obtenu en maintenant uniquement le bit le plus significatif pour la valeur d'entrée plus l'erreur accumulée (y + ye) dans le plan jaune.

4. Procédé selon la revendication 3, **caractérisé en ce que** les LUT de couleur ont deux dimensions de 8 rangées par 8 colonnes et que chacune des 64 cellules possède l'une des valeurs suivantes, M, B, C, W, où W signifie la sortie d'aucun point, M délivre en sortie un point magenta, C délivre en sortie un point cyan et B délivre en sortie un point cyan et magenta, et dans lequel le plan jaune est ignoré.

5. Procédé selon l'une des revendications précédentes, **caractérisé en ce que**

   - l'étape de génération d'un ensemble limité de LUT de couleurs consiste à générer un ensemble de 143 tables de consultation à l'aide des règles suivantes :

      les cellules de réseau au niveau de chaque coin sont fixées à la couleur du coin ;
      toutes les autres cellules ont au moins un côté connecté à une cellule ayant la même couleur ;

   - l'étape de mise en demi-teinte de tâches de couleur constante pour chaque composante de couleur d'entrée (c, m, y) avec chacune de ces LUT de couleur comprend :

      la génération d'une tâche de couleur pour chaque couleur d'entrée différente (c, m, y) où y = 0 ;
      la mise en demi-teinte de chaque tâche de couleur à l'aide de chacune des 143 LUT de couleur générées précédemment, produisant ainsi 143 différentes tâches en demi-teintes pour chaque couleur d'entrée (c, m, 0) ;

   - l'étape d'analyse des tâches résultantes et la sélection d'une LUT de couleur optimale pour chaque couleur d'entrée (c, m, y) comprend :

      le calcul de l'écart-type de la valeur de luminosité Br de chaque pixel pour la tâche entière et la conservation uniquement des 20 taches de couleur qui minimisent la distance de couleur d ;
      la détermination des points remarquables pour la couleur (c, m, 0) ;
      le calcul d'une fonction de regroupement CL qui mesure la distribution spatiale de points remarquables dans les tâches ;

la conservation des 6 tâches qui minimisent la fonction de regroupement CL ;
l'affichage des 6 tâches restantes sur un dispositif d'affichage et le choix de la plus agréable à l'oeil ; et
la répétition des étapes précédentes pour une grille de couleurs couvrant les plans cyan et magenta.

6. Procédé selon la revendication 5 **caractérisé en ce que** la luminosité Br de chaque pixel est approximée par la formule Br = 255 - 0,2*c - 0,7*m - 0,1y.

7. Procédé selon la revendication 5 ou 6 **caractérisé en ce que** la fonction de regroupement CL est conçue pour être grande lorsque des pixels sont disposés en groupes ou en grappes et petite lorsqu'ils sont répartis de manière régulière.

8. Procédé selon la revendication 7 **caractérisé en ce que** chaque LUT de couleur sélectionnée est utilisée pour créer une LUT de couleur tridimensionnelle par ajout de Oy = 0 à chaque cellule, puis par duplication de la LUT avec Oy = 1.

9. Procédé selon la revendication 8, **caractérisé en ce que** la grille de couleur couvrant les plans magenta et cyan est constituée des 64 couleurs qui sont formées par toutes les permutations prises dans le groupe de deux des quantités 15, 47, 79, 111, 143, 175, 207 et 239.

10. Procédé selon la revendication 9, **caractérisé en ce que**, une fois que chaque couleur de la grille a été optimisée, toutes les n LUT de couleur parmi les 143 LUT d'origine reçoivent un indice différent entre 0 et n-1 et **en ce qu'**une LUT d'index est créée en collectant ces indices de couleur en un réseau bidimensionnel et **en ce que** le réseau bidimensionnel est rendu tridimensionnel par répétition de ce réseau pour les deux plans de la composante y.

## Fig.1

Input Image File

Decompress to RGB

Color correction for Printer

Convert to CMY(K)

Zoom

Halftone

Transmit to printer

Fig.2

```
(ce, me, ye)      ┌──────────────┐
           ┌─────→│ Calculate and │←─────┐
           │      │  Distribute   │      │
           │      │    Errors     │      │
           │      └──────────────┘      │
┌────────┐ │                             │
│ Input  │ │         ┌───────────┐       │  ┌────────┐
│ Image  │ │   ⊕ ──→ │ Quantizer │ ──→ •──→│ Output │
│  Iij   │──→(c, m, y)│           │          │ Image  │
└────────┘            └───────────┘          │  Oij   │
                                             └────────┘
```

## Fig.3

Fig.4

Fig.5

## Fig.6

## Fig.7

# Fig.8

| Magenta | mi \ ci | 0 | 1 | 2 | 3 | 4 | 5 | 6 | 7 |
|---|---|---|---|---|---|---|---|---|---|
| 224-255 | 7 | 9 | 7 | 2 | 9 | 2 | 9 | 2 | 9 |
| 192-223 | 6 | 4 | 9 | 7 | 9 | 0 | 7 | 5 | 9 |
| 160-191 | 5 | 9 | 1 | 9 | 2 | 7 | 2 | 10 | 10 |
| 128-159 | 4 | 9 | 9 | 9 | 9 | 9 | 0 | 0 | 1 |
| 96-127 | 3 | 7 | 9 | 9 | 9 | 9 | 9 | 9 | 9 |
| 64-95 | 2 | 9 | 9 | 9 | 2 | 9 | 9 | 4 | 9 |
| 32-63 | 1 | 9 | 3 | 7 | 0 | 9 | 1 | 2 | 10 |
| 0-31 | 0 | 9 | 5 | 8 | 9 | 9 | 9 | 6 | 9 |
| | | 0-31 | 32-63 | 64-95 | 96-127 | 128-159 | 160-191 | 192-223 | 224-255 |

Cyan

Fig.9

LUT 76

# Fig.10

LUT 1 LUT 2 LUT 3 LUT 4 LUT 5 LUT 6 LUT 7 LUT 8 LUT 9 LUT10 LUT11

LUT12 LUT13 LUT14 LUT15 LUT16 LUT17 LUT18 LUT19 LUT20 LUT21 LUT22

LUT23 LUT24 LUT25 LUT26 LUT27 LUT28 LUT29 LUT30 LUT31 LUT32 LUT33

LUT34 LUT35 LUT36 LUT37 LUT38 LUT39 LUT40 LUT41 LUT42 LUT43 LUT44

LUT45 LUT46 LUT47 LUT48 LUT49 LUT50 LUT51 LUT52 LUT53 LUT54 LUT55

LUT56 LUT57 LUT58 LUT59 LUT60 LUT61 LUT62 LUT63 LUT64 LUT65 LUT66

LUT67 LUT68 LUT69 LUT70 LUT71 LUT72 LUT73 LUT74 LUT75 LUT76 LUT77

Fig.11

LUT 78 LUT 79 LUT 80 LUT 81 LUT 82 LUT 83 LUT 84 LUT 85 LUT 86 LUT 87

LUT 88 LUT 89 LUT 90 LUT 91 LUT 92 LUT 93 LUT 94 LUT 95 LUT 96 LUT 97

LUT 98 LUT 99 LUT 100 LUT 101 LUT 102 LUT 103 LUT 104 LUT 105 LUT 106 LUT 107

LUT 108 LUT 109 LUT 110 LUT 111 LUT 112 LUT 113 LUT 114 LUT 115 LUT 116 LUT 117

LUT 118 LUT 119 LUT 120 LUT 121 LUT 122 LUT 123 LUT 124 LUT 125 LUT 126 LUT 127

LUT 128 LUT 129 LUT 130 LUT 131 LUT 132 LUT 133 LUT 134 LUT 135 LUT 136 LUT 137

LUT 138 LUT 139 LUT 140 LUT 141 LUT 142 LUT 143

# Fig.12

| Magenta | 15 | 47 | 79 | 111 | 143 | 175 | 207 | 239 |
|---|---|---|---|---|---|---|---|---|
| 239 | cyan | cyan+blue | cyan | cyan | cyan | cyan | cyan+magenta | cyan+magenta |
| 207 | cyan+white | cyan | cyan+blue | cyan | cyan | cyan | cyan+magenta | cyan+magenta |
| 175 | cyan | cyan+white | cyan | blue | blue | cyan | magenta | magenta |
| 143 | cyan | cyan | white | cyan | blue | blue | magenta | magenta |
| 111 | cyan | cyan | white | white | magenta | blue | magenta | magenta |
| 79 | cyan | cyan | cyan | white | white | magenta | magenta+blue | magenta |
| 47 | cyan+magenta | cyan+magenta | magenta | magenta | magenta | magenta+white | magenta | magenta+blue |
| 15 | cyan+magenta | cyan+magenta | magenta | magenta | magenta | magenta | magenta+white | magenta |

**Cyan**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6002804 A

- US 20030038953 A1

### Non-patent literature cited in the description

- **ROBERT ULICHNEY.** Digital Halftoning. The MIT Press, 1987

- **R. FLOYD ; L. STEINBERG.** Adaptive Algorithm for Spatial Grey Scale. *SID Int'l. Sym. Digest of Tech. Papers,* 1975, 36-37